# FASCICULE DE BREVET EUROPEEN

(11) **EP 0 378 027 B1**
(45) Date de publication et mention de la délivrance du brevet: **06.10.1993**
(21) Numéro de dépôt: 89403681.3
(22) Date de dépôt: 29.12.1989
(51) Int. Cl.: B65B 9/02, B65B 61/02

(54) **Procédé et dispositif pour la réalisation de sachets en forme et contenant des doses unitaires de produits**
Verfahren und Vorrichtung zum Herstellen von abgemessene Mengen von Produkten enthaltenden Beuteln bestimmter Form
Method and apparatus for the creation of shaped pouches containing individual doses of products

(30) Priorité: 12.01.1989 FR 8900337
(43) Date de publication de la demande: 18.07.1990
(73) Titulaire: SOCOPLAN Société Anonyme, F-79100 Thouars (FR)
(72) Inventeur: Planchard, Christian, F-17960 Angoulins sur Mer (FR)
(74) Mandataire: Wagret, Frédéric

(56) Documents cités:
- FR-A- 1 064 427
- FR-A- 1 453 508
- GB-A- 2 033 846
- GB-A- 2 067 976
- US-A- 3 423 902
- MODERN PACKAGING, vol. 35, no. 5, janvier 1962, pages 90-92; "Laminated-plastic"

## Description

La présente invention concerne un procédé, et un dispositif en vue de la mise en oeuvre du procédé, permettant la réalisation de sachets doses contenant chacun une quantité prédéterminée d'un produit.

Et plus spécialement l'invention permet de réaliser de tels sachets constitués de deux faces ou films d'un matériau complexe, thermoscellés par leurs bords et comportant intérieurement une capacité définie par le volume situé entre les deux films et contenant une quantité dosée d'un produit notamment liquide ou pâteux ; plus spécialement l'invention vise à permettre la réalisation de tels sachets selon un contour et une forme quelconque.

On connaît des procédés permettant de réaliser par thermoscellage partiel de deux films complexes mis en regard, des sachets individuels contenant intérieurement une dose d'un produit. On connait également par le document MODERN PACKAGING janv. 1962 p. 90-92 des sachets qui sont une miniature de la présentation commerciale, qui sert de base pour le préambule.

La présente invention vise à améliorer ce procédé connu tout en permettant de réaliser, en continu des sachets découpés selon une forme quelconque et prédéterminée sans rupture de charge et en obtenant des produits d'une parfaite présentation évitant tout défaut dans la concordance souhaitable et nécessaire entre le profil de la découpe et l'image imprimée sur le sachet.

A cet effet l'invention concerne en premier lieu un procédé tel que defini dans la revendication 1.

L'invention concerne également un dispositif pour la mise en oeuvre du procédé pour la réalisation de sachets contenant une dose individuelle d'un produit, le dispositif étant conforme à la revendication 3 qui suit.

D'autres caractéristiques et avantages de l'invention ressortiront de la description qui suit et qui est donnée en rapport avec une forme de réalisation présentée à titre d'exemple non limitatif en se référant aux dessins annexés.

La figure 1 représente une vue en coupe et schématique du dispositif et montrant les phases successives du procédé.

La figure 2 représente une vue de détail en perspective des phases successives du procédé.

Les figures 3a,3b et 3c représentent trois vues d'un sachet dose réalisé conformément à l'invention et à partir du dispositif des figures 1 et 2.

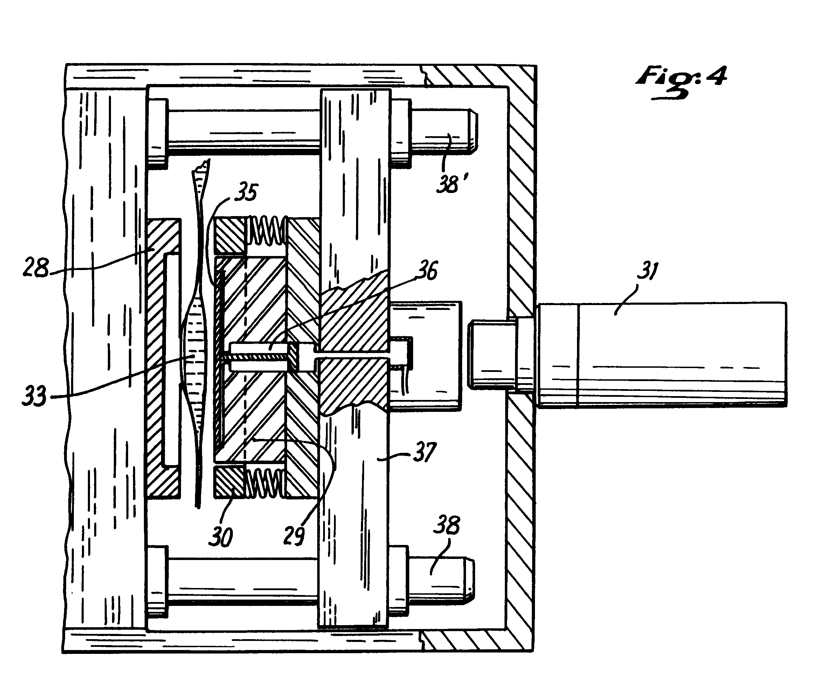

La figure 4 représente une vue de détail en coupe de l'ensemble de découpe et de détourage des sachets.

La figure 5 représente une vue schématique montrant le dispositif de l'invention et ses organes périphériques.

En considérant en premier la figure 5, qui donne une vue d'ensemble de la machine, on voit qu on dispose au centre d'un groupe de conditionnement et de réalisation de sachets à découpe selon un contour quelconque.

La machine 1 comporte un ensemble 2 de scellage et de conformation des sachets et à la partie inférieure un ensemble de découpe en forme 3.

Les sachets étant évacués par le tapis 4 pour être stockés dans les cartons 5 disposés sur la palette 6.

En amont la machine est alimentée en produits a conditionner depuis les conteneurs de réserve 7 dans l'un desquels plonge le tube de prelèvement de la pompe 8 conduisant le produit au dispositif de dosage 9.

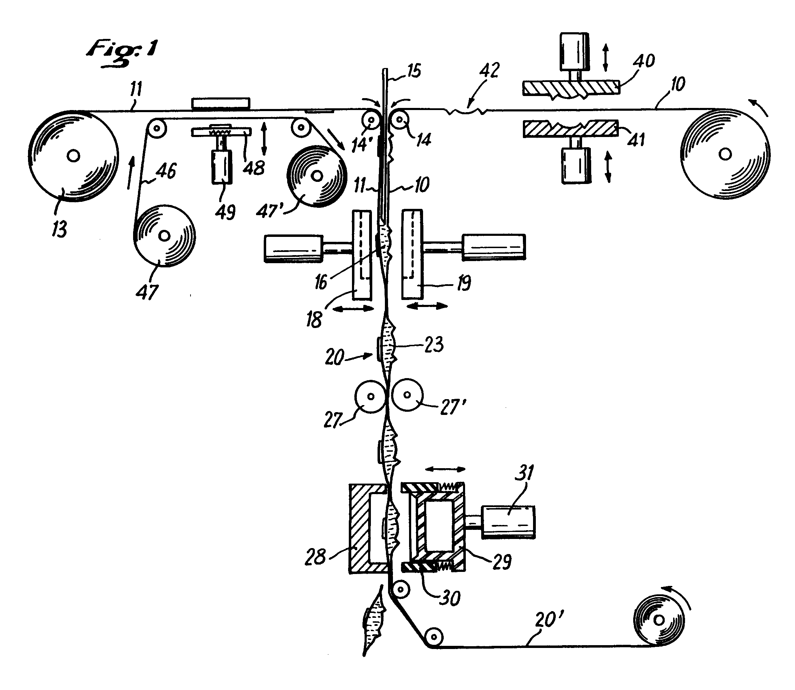

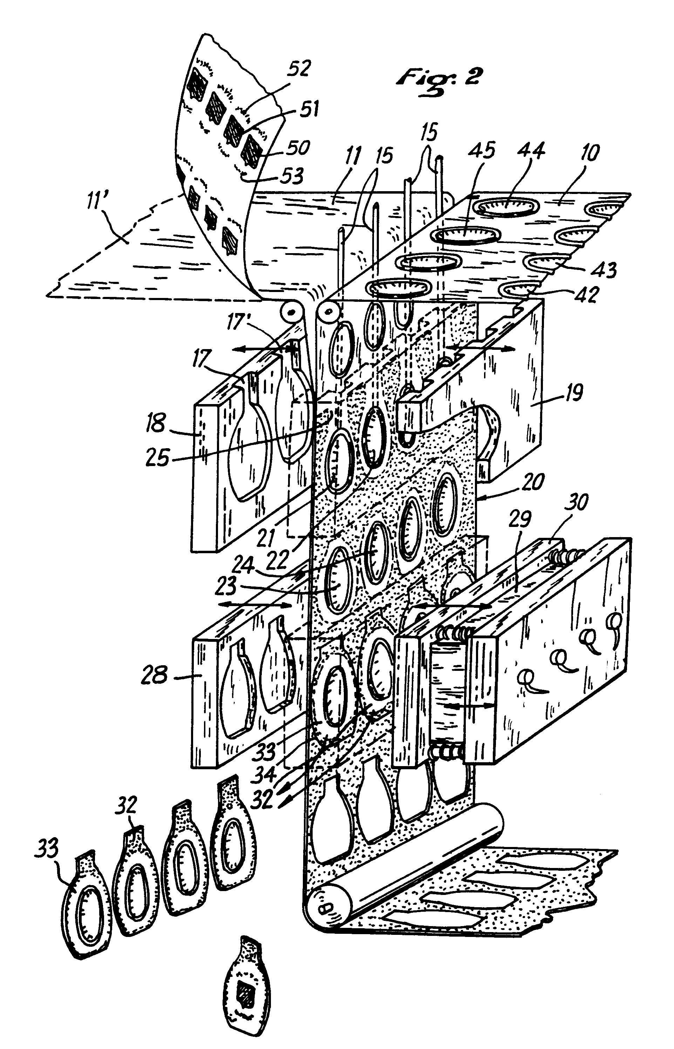

Les figures 1 et 2 donnent une vue plus directe des diverses phases du procédé et des moyens mis en oeuvre dans le cadre du dispositif de l'invention.

Selon la figure 1 les sachets sont conformés à partir de deux films respectivement 10 et 11 délivrés depuis les bobines 12 et 13.

Les deux films 10 et 11 sont constitués d'un complexe dont les faces venant en regard, en aval des rouleaux de renvoi 14,14′, sont thermosoudables.

Les deux films respectivement 10 et 11 au-delà des rouleaux de renvoi 14, 14′ cheminent donc pratiquement l'un contre l'autre en enserrant entre eux au moins un tube 15 constituant organe de dépose et de délivrance d'une dose de produit notamment sous forme pâteuse susceptible d'être ainsi déposée en 16 entre les deux films 10 et 11.

Selon l'exemple de la figure 2 on voit que l'on a disposé transversalement une pluralité de tubes de distribution 15 qui vont chacun déposer une quantité dosée de produits le long d'une ligne transversale par rapport à l'axe de défilement vertical des deux films 10 et 11.

Au niveau de la dépose du produit notamment pâteux par le tube 15, se trouve conformée une poche recevant la quantité dosée de produits 16 et cette poche est obtenue par solidarisation des deux faces thermosoudables et disposées en regard des deux films 11 et 10.

Cette solidarisation se fait, comme on le voit aux figures 1 et 2 à partir du rapprochement de deux empreintes chauffantes qui comportent cependant vers leur sommet une partie ou zone sans contact.

Cette zone 17,17′, dans laquelle les mâchoires 18,19 ne sont pas en contact, permet de laisser le passage pour le tube 15 lequel pénètre ainsi à l'intérieur de la poche conformée par les formes disposées en regard sur les empreintes chauffantes 18 et 19.

On voit que l'ensemble formé par les deux films 10 et 11 avance pas à pas et chaque période d'arrêt permet le rapprochement des empreintes 18 et 19 pour conformer, selon la figure 2, une pluralité de poches ou sachets sur une ligne transversale par rapport au défilement vertical.

On comprend que après rapprochement des empreintes 18,19 les deux films 10 et 11 sont solidarisés sur l'ensemble de leurs surfaces (et notamment sur les surfaces représentées et traitées en pointillés sur la figure 2), ne laissant subsister que des poches disposées par quatre le long de ligne transversale, chaque poche contenant une dose de produit.

La nappe globale 20 formée ainsi de la réunion des films 11 et 10 poursuit son chemin pas à pas en entraînant avec elle en son sein les rangées de poches respectivement 21,22,23,24 qui contiennent chacune une quantité ou dose d'un produit notamment sous forme pâteuse.

On comprend que les tubes 15,15′ pourraient être remplacés par des organes plongeurs déposant entre les films un produit autre, tel qu'un produit médicamenteux, un pansement imprégné ou une lingette comportant un produit parfumé, etc...

Selon une particularité de l'invention on voit que au-dessus de chaque poche 21,22, lors du rapprochement des empreintes 18,19, subsiste une zone 25 non thermosoudée correspondant aux creux 17,17′ des empreintes 18, 19.

Après défilement vers le bas de la nappe 20, cette zone 25 se trouve alors positionnée de façon à être prise entre la partie inférieure 26 des empreintes 18 et 19 et la zone 25 non thermosoudée jusque là se trouve alors reprise en thermosoudure de sorte que les poches 23,24 sont alors hermétiquement fermées.

La nappe 20 passe entre les rouleaux d'appel 27,27′ qui commandent le défilement et permettent d'ajuster et de corriger le positionnement de la bande 20 en cours de défilement pas à pas.

La nappe 20 pénètre alors dans un ensemble de découpe constitué d'une matrice 28 coopèrant avec un poinçon 29, associé à un dévetisseur 30, le poinçon étant monté mobile par rapport à la matrice au moyen du vérin hydraulique 31.

Le rapprochement de l'ensemble poinçon-dévétisseur amène dans un premier temps le dévétisseur marginal au contact du bord extérieur de la matrice 28 et bloque en position l'ensemble de la nappe contenant les poches selon une rangée transversale, poches qui devront conformer les sachets individuels.

La poursuite du mouvement du poinçon 29 sous l'action du vérin 31 permet l'engagement du poinçon à l'intérieur de la matrice en assurant ainsi la découpe des sachets individuels tout autour des poches 32,33 selon la ligne de découpe 34 correspondant au contour du poinçon et au contour correspondant de la matrice réceptrice du poinçon.

Après découpe selon la ligne 34 on obtient ainsi les sachets individuels 32,33 qui sont dégagés au moyen de l'éjecteur 35 lui-même manoeuvré par le vérin pneumatique 36 inséré au coeur du poinçon.

De façon connue, l'équipage constitué par le poinçon et le dévétisseur 30, montés sur la plaque arrière 37 est guidé par les colonnes à billes 38,38′.

Après écartement des mâchoires de l'ensemble de découpe , les sachets détourés individuellement 32,33 sont ainsi séparés de la nappe, chaque sachet ayant été découpé à la forme voulue et correspondant au contour respectivement du poinçon et de la matrice.

Dans l'exemple représenté le sachet contenant un produit cosmétique ou éventuellement un produit détergent constitue un échantillon et ce sachet représente le flacon du produit tel que vendu dans sa présentation commerciale.

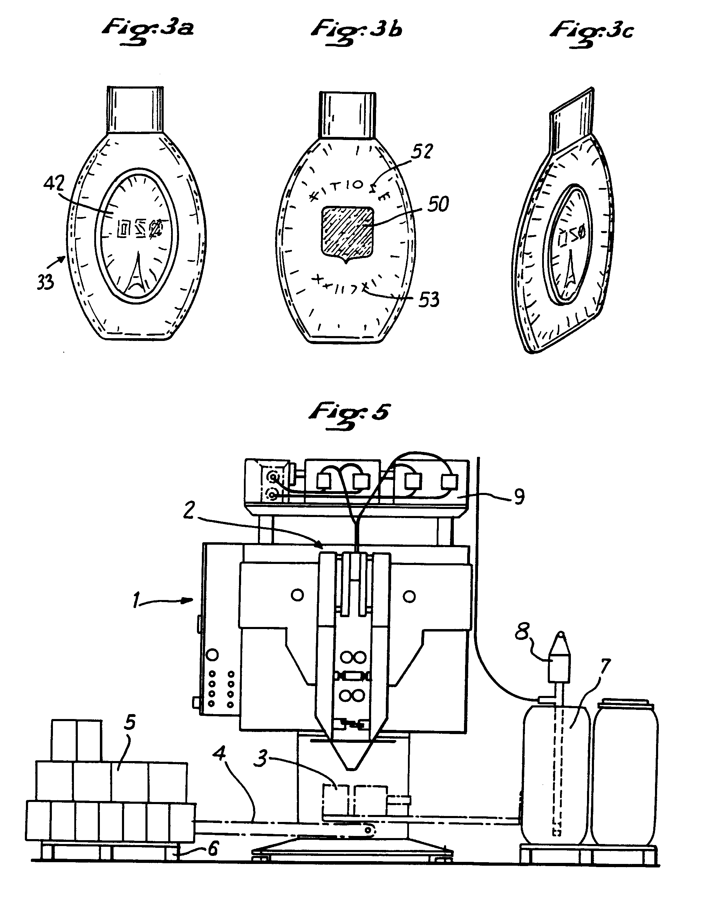

Les figures 3a,3b et 3c donnent des vues respectivement selon deux faces et de trois quarts du sachet obtenu dans le cadre de la mise en oeuvre de l'invention.

Les films 10 et 11 pourront recevoir avantageusement au départ une impression (qui n'est pas représentée sur les figures 1 et 2, et qui correspond aux illustrations voulues sur le sachet une fois découpé en forme).

Ces impressions pourront notamment être constituées de marques commerciales ou inscriptions représentant de façon plus vivante le flacon illustré par le sachet par exemple avec une représentation ombrée latéralement du bouchon supérieur.

Et avantageusement selon l'invention on a prévu que l'impression qui vise à correspondre à la découpe du sachet une fois détouré, pourra, sur ses bords déborder légèrement de façon à autoriser une certaine tolérance entre la représentation figurée sur le film et la ligne de découpe réelle.

Pour éviter toute distorsion et obtenir un résultat parfaitement "bord à bord" on a prévu un dispositif (non représenté) de recentrage de la nappe 20, de telle façon d'une part que les sachets soient découpés exactement autour de la poche centrale contenant le produit et uniquement dans les zones thermosoudées, afin d'éviter que la poche ne soit ainsi ouverte sur l'extérieur ; ce centrage vise également à obtenir la concordance exacte entre la ligne de découpe 34 et les représentations illustrées et imprimées sur les parois extérieures des films.

Selon un autre développement de l'invention, on a prévu que les parois du sachet pourront recevoir des compléments décoratifs soit sous forme de décor ou ornement obtenus par transfert, soit sous forme d'une impression en relief.

On voit ainsi sur la figure 1 que le film 10 passe entre les mâchoires respectivement supérieures 40 et inférieures 41 d'un ensemble de conformation en relief ou de gaufrage dont les reliefs sont complémentaires.

Le rapprochement des mâchoires permet ainsi une mise en relief du film 10 en obtenant les motifs décoratifs imprimés en relief et constitués des profils ovales 42,43,44,45.

Ce décor en relief viendra se situer sur une face du sachet pour illustrer et décorer le flacon (figure 3a) que représente le sachet.

Sur le film 11 on a, selon la figure 1, représenté un autre développement de l'invention permettant un effet décoratif par dépose d'une pellicule transférable.

Cette pellicule est déposée sur une contrefeuille 46 déroulée entre les bobines 47,47′.

La pellicule transférable est ainsi positionnée sur la contrefeuille 46 de façon à être mise au contact du film 11 sur sa paroi extérieure.

Cette pellicule transférable à chaud subit l'action de fer 48 déplaçable par le vérin 49 et muni de moyens de chauffage, ce fer comporte un cliché en relief tel que l'empreinte de ce fer 48 transfère sur le film 11 une pellicule transférable dans la zone ayant subi l'action du fer chauffant.

Et l'on voit sur la figure 2 que ce transfert permet d'obtenir des motifs décoratifs constitués ici des écussons 50,51 et des inscriptions 52,53.

Le film 11 a été retourné dans la partie supérieure de la figure 2 pour illustrer sa face devant constituer son recto, étant compris que le film est cependant déroulé selon le plan représenté en pointillés et référencé 11′.

On voit que on obtiendra ainsi sur la face du sachet, opposée à la face ayant reçu le motif en relief 45, un élément décoratif par exemple sous forme de l'écusson 50 accompagné des inscriptions 52,53 (figure 3b).

On voit que l'invention peut connaître des développements extrêmement variés car toute forme de découpe sont possibles ; il suffit en effet de retirer le bloc matrice et poinçon correspondant à une forme déterminée, pour le remplacer par un autre bloc donnant une forme nouvelle et correspondant au profil voulu pour le sachet.

On obtient ainsi un renouvellement et un pouvoir d'attraction considérablement renouvelé pour ce type de produit, échappant à la pauvreté d'aspect des sachets traditionnels de forme quadrangulaire.

Le transfert depuis une pellicule de motifs décoratifs peut se cumuler avec le gaufrage, le relief formé étant réhaussé par la présence par exemple d'un surfaçage doré ou laqué.

Et les opérations de gaufrage en relief et de dorure a chaud peuvent intervenir en aval de la formation des sachets entre les mâchoires 18,19 par exemple sur des volets latéraux solidaires des sachets eux-mêmes.

Dans le cadre des exemples décrits, le sachet est conformé à partir de deux feuilles qui sont elles-mêmes déroulées à partir de bobines indépendantes.

On comprend que les deux feuilles peuvent parfaitement être déployées à partir d'une seule bobine, par exemple le film unique étant replié sur lui-même pour définir les deux feuilles amenées l'une contre l'autre et appelées à être thermosoudées lors de la formation du sachet.

On comprendra également que le procédé et la phase de découpe en forme qui a été ici décrite comme permettant de détourer le sachet, peut en réalité être appliqué à toute sorte de découpe au sein de la nappe comportant les sachets.

Il est notamment parfaitement possible et dans le cadre de la présente invention de réaliser des logements, fenêtres, ouvertures, perforations, dans la nappe, plus spécialement dans les zones de la nappe qui sont réalisées à partir des deux feuilles contrecollées ; on peut ainsi réaliser dans l'ensemble définissant le sachet individuel des zones perforées ou évidées soit à des fins techniques (par exemple pour l'insertion d'un lien permettant la suspension ou l'accrochage du sachet individuel sur un support, soit à des fins parfaitement et uniquement décoratives ; on pourra ainsi dans le cadre d'une "mise en page" et d'une présentation originale du sachet prévoir sur une zone du sachet latérale, ne correspondant pas à la capacité contenant le produit à l'état pâteux ou liquide, une ouverture ou un évidement selon un contour original qui pourra par exemple illustrer et représenter une silhouette ou un logotype ou un monogramme correspondant à la marque du fabricant.

Dans ce cas on prévoira que les dispositifs d'éjection affectent non le sachet (capacité contenant le produit) mais le "bouchon" qui aura été découpé à l'intérieur de la nappe et qui devra donc être éliminé.

Dans ce cas on peut imaginer plusieurs phases de découpe successives une première phase permettant de découper dans chaque futur sachet individuel l'évidement ou la perforation (ornemental ou utilitaire) la nappe poursuivant son chemin étant alors amenée à une étape ultérieure de découpe en forme qui détoure alors le sachet, ce dernier étant détaché de la nappe et comportant, sur chaque sachet, une zone évidée selon un contour voulu (décoratif ou utilitaire).

On peut également prévoir que après la phase des perforations dans chaque sachet, la nappe soit découpée longitudinalement et transversalement pour définir des sachets individuels de forme générale quadrangulaire, comportant cependant à titre soit utilitaire, soit décoratif, un évidement dans la surface du sachet.

## Revendications

1. Procédé pour la fabrication de sachets individuels contenant chacun une dose constituant échantillon d'un produit actif, le procédé étant du type comportant la succession des opérations suivantes :
a) on déroule pas à pas deux films (10, 11) devant conformer le sachet et dont les faces en regard sont thermosoudables, les films devant conformer le sachet sont préimprimés et reçoivent, sur leurs faces correspondant aux parois extérieures du sachet des représentations, inscriptions et décor correspondant à l'image du conteneur utilisé pour le conditionnement et la présentation commerciale du produit contenu dans la dose échantillon,
b) on amène les deux films sensiblement en contact entre eux et de chaque côté d'un organe de dépose (15) d'un produit disposé entre les deux films,
c) on rapproche deux empreintes de chauffage (18, 19) pour venir enserrer les deux films dans un premier poste de thermosoudure, les deux empreintes de chauffage étant aptes à provoquer la thermosoudure des deux films entre eux, autour du produit qui peut être déposé étant ainsi contenu dans une capacité (16) au moins partiellement fermée,
d) on écarte lesdites empreintes après thermosoudure partielle des films et on déplace la nappe unitaire (20) ainsi formée vers un second poste de soudure aval,
e) on referme la capacité dans la partie incomplètement soudée lors de l'étape précédente par rapprochement des mâchoires de thermosoudure dans ce second poste et l'on déplace les films contenant les capacités vers un poste de découpe,
f) on provoque le rapprochement, audit poste de découpe, d'un poinçon (29) et d'une matrice (28) correspondant au profil voulu pour le sachet et permettant de découper à l'emporte-pièce au moins un sachet (33) séparé de la nappe (20), le contour respectivement du poinçon et de la matrice étant conformés et disposés de façon à découper la nappe (20) autour de la capacité (16) contenant le produit et la découpe s'opérant dans les seules zones de la nappe où les deux films sont thermosoudés,
g) on recueille les sachets ainsi découpés tandis que la nappe évidée (20') est évacuée,
h) on découpe le sachet, par poinçon et matrice selon la joue thermosoudée de la nappe en suivant le contour du conteneur représenté sur les faces du sachet pour obtenir un sachet-dose constituant une reproduction en réduction du conditionnement commercial du produit contenu,
caractérisé par la combinaison des points suivants :
i) à cet effet, les plages marginales de la représentation du conteneur sont prévues en débordement par rapport à la ligne future de découpe, en permettant une certaine tolérance dans la concordance entre la ligne de découpe et le bord de ladite représentation,
j) et au moins un des films et/ou la nappe formée des deux films réunis, est soumis, à une étape quelconque de la mise en oeuvre du procédé, à la dépose d'une couche superficielle d'une pellicule décorative de transfert venue elle-même d'une contrefeuille (46) déroulée entre deux bobines d'alimentation (47) et d'appel (47'), la contrefeuille étant pressée, contre une paroi d'appui, par une empreinte (48), éventuellement à chaud, de forme et contour appropriés en provoquant le transfert d'une pellicule décorative selon le décor correspondant aux dites représentations sur la face apparente du film ou de la nappe devant constituer le sachet.

2. Procédé selon la revendication 1,
caractérisé en ce que avant remplissage et soudure, selon b) et c) ci-dessus, au moins un des films est soumis séparément à déformation superficielle par insertion entre deux empreintes (40, 41) de reliefs complémentaires, les deux empreintes étant aptes à provoquer sur le film ou sur la nappe ainsi traitée une image ou inscription en relief, correspondant aux dites représentations imprimées,

3. Dispositif pour la mise en oeuvre du procédé selon l'une des revendications 1 à 2 pour la réalisation de sachets contenant une dose individuelle d'un produit, le dispositif comportant en combinaison :
a) au moins une source (13, 12) apte à délivrer deux films (10, 11) venant en contact par leurs faces thermosoudables déposées en regard,
b) un organe de dépose (15) d'une quantité unitaire d'un produit actif inséré entre les deux films,
c) deux mâchoires de thermosoudure (18, 19), aptes à enserrer les deux films et à provoquer à un premier poste leur soudure au moins partielle en conformant une poche définissant une capacité (16) entre les deux films et apte à recevoir le produit contenu, et à un second poste aval la soudure des bords de ladite capacité sur les zones laissées libres au premier poste,
d) des moyens de déplacement pas à pas (27, 27') des deux films et de la nappe (20) réunissant les deux films,
e) un ensemble de découpe de la nappe autour des capacités ainsi formées et constitué d'un poinçon de découpe (29) coopérant avec une matrice (28) réceptrice pour détourer la capacité selon un profil voulu dans la zone thermosoudée de la nappe, afin de définir un sachet individuel, le poinçon (29) et la matrice (28) de découpe étant de formes prévues pour détourer le sachet selon des représentations, en permettant de réaliser des sachets de formes et contour correspondant à la représentation que le sachet comporte sur au moins une face et correspondant au conditionnement commercial du produit contenu
et le dispositif est caractérisé en ce qu'une empreinte (48) de forme et contour approprié est disposée de façon à permettre le transfert d'une pellicule décorative selon le décor correspondant aux dites représentations sur la face apparente du film ou de la nappe devant constituer le sachet.

4. Dispositif selon la revendication 3,
et caractérisé en ce qu'il comporte un ensemble de mise en forme constitué de deux mâchoires (40, 41) portant des reliefs complémentaires et aptes à enserrer un film ou la nappe en provoquant leurs déformations superficielles pour réaliser une représentation en relief d'un motif ou inscription voulue, correspondant notamment à des représentations préimprimées sur au moins une face visible dudit film.

## Claims

1. Process for the manufacture of individual sachets each containing a dose constituting sample of an active product, the process being of the type comprising the following successive operations:
a) two films (10, 11) having to form the sachet and whose opposite faces are heat-sealable, are unwound step by step, the films having to form the sachet are pre-printed and receive on their faces corresponding to the outer walls of the sachet, representations, inscriptions and decoration corresponding to the image of the container used for packing and the commercial presentation of the product contained in the sample dose,
b) the two films are brought substantially into contact together and on each side of a member (15) for depositing a product disposed between the two films,
c) two heating impressions (18, 19) are brought towards each other to grip the two films in a first heat-sealing station, the two heating impressions being adapted to provoke heat-seal of the two films together, around the product which may be deposited thus being contained in an at least partially closed volume (16),
d) said impressions are spaced apart after partial heat-seal of the films and the unitary web (20) thus formed is displaced towards a second sealing station downstream,
e) the volume is closed in the part incompletely sealed during the preceding step, by bringing together the heat-seal jaws in this second station and the films containing the volumes are displaced towards a cut-out station,
f) at said cut-out station, a die (29) and a mould (28) corresponding to the profile desired for the sachet, are brought together, making it possible to stamp out at least one sachet (33) separated from the web (20), the respective contour of the die and of the mould being formed and disposed so as to cut out the web (20) around the volume (16) containing the product and cut-out being effected only in those zones of the web where the two films are heat-sealed,
g) the sachets thus cut out are collected, whilst the cut web (20') is evacuated,
h) the sachet is cut out by die and mould along the heat-sealed cheek of the web, following the contour of the container represented on the faces of the sachet in order to obtain a dosed sachet constituting a scaled-down reproduction of the commercial packing of the product contained,
characterized by the combination of the following points:
i) to that end, the marginal areas of the representation of the container are provided in excess with respect to the future line of cut-out, allowing a certain tolerance in the concordance between the cut-out line and the edge of said representation,
j) and at least one of the films and/or the web formed by the two films joined, is subjected, at any stage in the execution of the process, to the deposit of a superficial layer of a decorative transfer film itself coming from a counter-sheet (46) unwound between two supply (47) and intake (47') reels, the counter-sheet being pressed against a bearing wall by an impression (48), possibly hot, of appropriate shape and contour, provoking the transfer of a decorative film with the decoration corresponding to said representations on the apparent face of the film or web having to constitute the sachet.

2. Process according to Claim 1,
characterized in that, before filling and sealing, according to b) and c) hereinabove, at least one of the films is subjected separately to superficial deformation by insertion between two impressions (40, 41) of complementary relief, the two impressions being adapted to make on the film or on the web thus treated an image or inscription in relief, corresponding to said printed representations.

3. Device for carrying out the process according to one of Claims 1 to 2 for making sachets containing an individual dose of a product, the device comprising in combination:
a) at least one source (13, 12) adapted to supply two films (10, 11) coming into contact by their heat-sealable faces deposited opposite each other,
b) a member (15) for depositing a unitary quantity of an active product inserted between the two films,
c) two heat-sealing jaws (18, 19) adapted to grip the two films and to provoke, at a first station, at least partial seal thereof, forming a bag defining a volume (16) between the two films and adapted to receive the product contained, and, at a second station downstream, seal of the edges of said volume on the zones left free at the first station,
d) means (27, 27') for displacing step by step the two films and the web (20) joining the two films,
e) an assembly for cutting out the web around the volumes thus formed and constituted by a cut-out die (29) cooperating with a receiving mould (28) to cut around the volume in a desired profile in the heat-sealed zone of the web, in order to define an individual sachet, the cut-out die (29) and mould (28) being of shapes provided to cut out the sachet in accordance with representations, making it possible to form sachets of shapes and contour corresponding to the representation that the sachet comprises on at least one face and corresponding to the commercial packing of the product contained,
and the device is characterized in that an impression (48) of appropriate form and contour is disposed so as to allow transfer of a decorative film in accordance with the decoration corresponding to said representations on the apparent face of the film or of the web having to constitute the sachet.

4. Device according to Claim 3,
and characterized in that it comprises a shaping assembly constituted by two jaws (40, 41) of complementary relief and adapted to grip a film or the web, provoking superficial deformation thereof in order to produce a representation in relief of a desired pattern or inscription, corresponding in particular to pre-printed representations on at least one visible face of said film.

## Patentansprüche

1. Verfahren zur Herstellung von einzelnen Behältnissen, wobei jedes Behältnis eine Probedosis eines Aktivprodukts enthält und wobei das Verfahren folgende aufeinanderfolgende Verfahrensschritte aufweist:
a) Schritt für Schritt werden zwei Filme (10, 11) abgewickelt, die das Behältnis bilden und deren gegenüberliegende Seiten thermisch verschweißbar sind, wobei zur Bildung des Behältnisses die Filme vorgeprägt sind und auf ihren Flächen, die den äußeren Wänden des Behältnisses der Ausführungsform entsprechen, Beschriftungen und Verzierungen aufweisen, die dem Bild des für die kommerzielle Verpackung und Präsentation des in der Probedosis enthaltenen Produkts benutzten Behälters entsprechen,
b) die zwei Filme werden direkt in Kontakt miteinander und mit jeder Seite eines Elements (15) zum Einbringen eines zwischen die beiden Filme einzubringenden Produktes gebracht,
c) in einer ersten Thermoschweißstation werden zwei die beiden Filme umgreifende Heizstempel (18, 19) zusammengeführt, wobei die zwei Heizstempel geeignet sind, die Verschweißung der beiden Filme miteinander und um das eingebrachte Produkt herum, das in einer wenigstens teilweise geschlossenen Kapazität enthalten sein kann, zu bewirken,
d) die Stempel werden nach der teilweisen Thermoverschweißung der Filme auseinandergebracht und die einheitliche Schicht (20) wird in Richtung einer zweiten, nachfolgenden Schweißstation verschoben,
e) die Kapazität wird in dem in der vorhergehenden Station unvollständig verschweißten Teil verschlossen durch Zusammenfügen von Thermoschweißbacken in dieser zweiten Station und die die Kapazität enthaltenden Filme werden in Richtung einer Schneidestation verschoben,
f) an der Schneidestation werden eine Stanze (29) und eine Matrize (28) zusammengeführt, die dem gewollten Profil des Behältnisses entsprechen und gestatten, daß das herangeführte Stück ausgeschnitten wird, um wenigstens ein Behältnis (33) von der Schicht (20) zu trennen, wobei die Konturen der Stanze bzw. Matrize derart angepaßt und angebracht sind, um die Schicht (20) um die das Produkt enthaltende Kapazität (16) herum zu schneiden, und der Schnitt wird nur in dem Bereich der Schicht ausgeführt in dem die Schicht oder die zwei Filme thermoverschweißt sind,
g) die auf diese Weise ausgeschnittenen Behältnisse werden gesammelt, während die ausgestanzte Schicht entfernt wird,
h) das Behältnis wird durch Stanze und Matrize entlang der thermoverschweißten Seitenbereiche der Schicht geschnitten je nach der Form des Behälters, der auf den Seiten des Behältnisses dargestellt ist, um ein eine verkleinerte Darstellung der kommerziellen Verpackung des enthaltenen Produktes darstellendes Probenbehältnis zu erhalten,
gekennzeichnet durch die Kombination der folgenden Merkmale:
i) die Randstreifen der Ausführungsform des Behältnisses sind übergroß vorgesehen im Vergleich zur zukünftigen Schnittlinie, um eine gewisse Toleranz in der Übereinstimmung zwischen der Schnittlinie und dem Rand der genannten Ausführung zuzulassen,
j) auf wenigstens einem der Filme und/oder der aus den vereinigten Filmen gebildeten Schicht wird an einer beliebigen Station des Herstellungsverfahrens die Oberflächenlage eines dekorativen Übertragungsfilms angebracht, der selbst von einer Gegenbahn stammt, die zwischen zwei Rollen, einer Versorgungsrolle und einer Aufnahmerolle, gespult wird, wobei die Gegenbahn gegen ein Gegenlager durch einen Stempel (48) mit der passenden Form und Kontur gegebenenfalls unter Hitzeeinwirkung gepreßt wird, um die Übertragung eines dekorativen Films gemäß den der Verzierung entsprechenden Ausführungen auf die sichtbare Fläche des das Behältnis bildenden Films oder der Schicht zu bewirken.

2. Verfahren nach Anspruch 1, dadurch gekennzeichnet, daß vor Füllung und Verschweißung gemäß den obengenannten Schritten b) und c) wenigstens einer der Filme einzeln oberflächenverformt wird durch Einsetzen zwischen zwei Stempeln (40, 41) mit komplementärem Relief, wobei die zwei Stempel geeignet sind, auf dem so behandelten Film oder auf der Schicht eine erhabene Abbildung oder Inschrift hervorzurufen, entsprechend den eingeprägten Ausführungen.

3. Vorrichtung zur Durchführung des Verfahrens nach einem der Ansprüche 1 oder 2 für die Herstellung von eine individuelle Menge eines Produkts enthaltenden Behältnissen, wobei die Vorrichtung in Kombination umfaßt:
a) wenigstens eine Quelle (13, 12) zum Liefern zweier Filme (10, 11), die mit ihren gegenüberliegenden, thermoverschweißbaren Seiten in Kontakt kommen,
b) ein Element (15) zum Einbringen einer zwischen die Filme zu bringender Mengeneinheit eines Aktivprodukts,
c) zwei Thermoschweißbacken (18, 19) zum Umgreifen der beiden Filme zum wenigstens teilweisen Verschweißen der beiden Filme an einer ersten Stelle unter Formung einer Tasche, die eine das Produkt aufnehmende Kapazität zwischen den zwei Filmen definiert und zum Verschweißen der an der ersten Stelle freigelassenen Ränder der genannten Kapazität an einer zweiten, nachfolgenden Stelle,
d) Transportmittel (27, 27') zur schrittweisen Fortbewegung der zwei Filme und der die zwei Filme vereinigenden Schicht (20),
e) eine Anordnung zum Schneiden der Schicht um die so geformten Kapazitäten herum, die aus einer Stanze (29) und mit dieser zusammenwirkenden Aufnahmematrize (28) besteht, zur Umfahrung der Kapazität entlang eines gewünschten Profils im thermoverschweißten Bereich der Schicht, um so ein einzelnes Behältnis zu definieren, wobei die Stanze (29) und die Matrize (28) zum Schneiden eine vorgesehene Form haben, um das Behältnis gemäß der Ausführungsform zu umfahren und wodurch die Form und Kontur der Behältnisse realisierbar ist gemäß der dem Behältnis eigenen Ausführungsform auf wenigstens einer Seite und entsprechend der kommerziellen Verpackung des enthaltenen Produktes,
dadurch gekennzeichnet, daß ein Stempel (48) mit entsprechender Form und Kontur derart angebracht ist, daß die Übertragung des dekorativen Films nach dem der Ausführungsform entsprechenden Dekor auf die sichtbare Seite des Films oder der Schicht aufgebracht werden kann.

4. Vorrichtung nach Anspruch 3, dadurch gekennzeichnet, daß die Vorrichtung eine Anordnung zur Formgebung aufweist, die aus zwei Backen (40, 41) mit komplementärem Relief besteht, wobei die Backen den Film oder die Schicht umgreifen, um deren Oberfläche zu verformen, um eine Ausführung mit einem Relief nach einem gewünschten Motiv oder Inschrift, insbesondere entsprechend den vorgedruckten Ausführungen, auf wenigstens einer sichtbaren Seite des genannten Films zu verwirklichen.
